# EUROPEAN PATENT APPLICATION

(11) **EP 4 382 780 A1**
(43) Date of publication of application: **12.06.2024**
(21) Application number: 23203346.4
(22) Date of filing: 12.10.2023
(51) Int. Cl.: F16K 5/06, F16K 37/00

(54) **VALVE CONTROL WITH INDETERMINANT STARTING STATE**

(30) Priority: 09.12.2022 US 202218078413
(71) Applicant: Hamilton Sundstrand Space Systems International, Inc., Windsor Locks, CT 06096 (US)
(72) Inventor: FLETCHER, Gabriel, Colchester (US); CREVIER, Ronald, Southington (US); VAN DERZEE, Nicholas Stoerm, Windsor Locks (US); WICHOWSKI, Robert P., Westfield (US); HOJNOWSKI, Walter S., Somers (US)
(74) Representative: Dehns

(57) **Abstract**

A valve control system includes a rotatable valve (110) operably coupled to a motor (102), a valve position indicator (108) configured to rotate with the rotatable valve, at least two sensing devices configured to detect the valve position indicator, and a controller. The at least two sensing devices include a home position sensing device (116A) and an end-of-travel position sensing device (116B). The controller (120) includes valve state determination logic having circuitry configured to monitor a status of a home indicator and an end-of-travel indicator of the rotatable valve, determine a commanded direction of movement of the rotatable valve, monitor the status of the home indicator and the end-of-travel indicator before a valve rotation stop is commanded and after the valve rotation stop is commanded, and determine a current state of the rotatable valve based on the commanded direction of movement and at least one of the status of the home indicator and the end-of-travel indicator.

## Description

The invention was made with U.S. Government support under Contract No. NNJ06TA25C, Subcontract No. RH6-118203 awarded by NASA. The U.S. Government may have certain rights in the invention.

### BACKGROUND

The present invention generally relates to control systems, and more specifically, to valve control with an indeterminant starting state.

There are many applications, in various fields, where fluid flow is regulated or controlled by opening and closing valves. Valves often include a valve body providing fluid inlets/outlets and a closure element having one or more passages therethrough. The position of the closure element relative to the valve body either allows the flow of fluid from an inlet, through the passage, to an outlet, when the passage is aligned with the inlet/outlet, or, when the passage is not aligned with the inlet and/or outlet, flow of fluid through the valve is blocked. A rotational valve includes a rotational closure element that rotates relative to the housing between the valve open and the valve closed position. An example of a rotational valve is a ball valve where the closure element can be a ball-type closure element located in the valve housing, and have a passage formed therethrough, and a shaft attached thereto.

It is generally desirable to know the rotational position of the valve closure element with respect to the housing to determine whether the valve is open or closed. Where a valve is in a partially open state, it can be more challenging to determine the degree to which the valve is open and to determine the rate of fluid flow through the valve.

When a system is initialized that includes a valve, the state of the valve may not be readily known. For example, a sensor may be used to detect whether the valve is open or closed; however, it may not be readily apparent how much further of an adjustment of the valve is needed to move from a partially open to a fully open state or from a partially open to a fully closed state. Some types of valves can include hard mechanical stops, while other valves may not include stops and thus may not have ready reference positions for driving the valve fully open or fully closed.

### BRIEF DESCRIPTION

An aspect of the present invention is directed to a valve control system that includes a rotatable valve operably coupled to a motor, a valve position indicator configured to rotate with the rotatable valve, at least two sensing devices configured to detect the valve position indicator, and a controller. The at least two sensing devices include a home position sensing device and an end-of-travel position sensing device. The controller includes valve state determination logic having circuitry configured to monitor a status of a home indicator and an end-of-travel indicator of the rotatable valve, determine a commanded direction of movement of the rotatable valve, monitor the status of the home indicator and the end-of-travel indicator before a valve rotation stop is commanded and after the valve rotation stop is commanded, and determine a current state of the rotatable valve based on the commanded direction of movement and at least one of the status of the home indicator and the end-of-travel indicator.

Embodiments may include where the valve position indicator includes a magnet coupled to a rotatable portion of the rotatable valve, where the magnet is detectable by the home position sensing device when the magnet is proximate to a home-position of the rotatable valve, and the magnet is detectable by the end-of-travel position sensing device when the magnet is proximate to an end-of-travel position of the rotatable valve.

Embodiments may include where the home position sensing device is a Hall effect device, and the end-of-travel position sensing device is a Hall effect device.

Embodiments may include where the at least two sensing devices include a primary home-position Hall effect device, a primary end-of-travel position Hall effect device, a secondary home-position Hall effect device, and a secondary end-of-travel position Hall effect device, where the primary home-position Hall effect device and the primary end-of-travel position Hall effect device are configured to detect a primary magnet coupled to a rotatable portion of the rotatable valve, and the secondary home-position Hall effect device and the secondary end-of-travel position Hall effect device are configured to detect a secondary magnet coupled to the rotatable portion of the rotatable valve.

Embodiments may include where the controller includes motor control logic configured to convert a command into one or more motor commands to drive the motor and valve control logic configured to communicate with the motor control logic and the valve state determination logic, where the valve control logic is further configured to provide feedback to the motor control logic based on the current state of the rotatable valve.

Embodiments may include where the current state of the rotatable valve is determined to be within range of the home position sensing device or the end-of-travel position sensing device based on a sensor device status detected before and after the valve rotation stop is commanded, and where the commanded direction is used to distinguish between the rotatable valve moving toward the home position sensing device or toward the end-of-travel position sensing device.

Embodiments may include where a moving flag is set based on determining that the home indicator and the end-of-travel indicator are not detected currently and are not detected before and after the valve rotation stop is commanded.

Embodiments may include where an over-travel condition is detected based on the detecting the home indicator or the end-of-travel indicator after the valve rotation stop is commanded, not currently detecting the home indicator or the end-of-travel indicator, and not detecting the home indicator or the end-of-travel indicator before the valve rotation stop is commanded.

Embodiments may include where an at-home flag is set based on the commanded direction being toward the home position sensing device and a first combination of: the home indicator being detected before the valve rotation stop is commanded and the home indicator not being detected after the valve rotation stop is commanded, or a second combination of the home indicator not being detected before the valve rotation stop is commanded and the home indicator being detected after the valve rotation stop is commanded.

Embodiments may include where an at-end-of-travel flag is set based on the commanded direction being toward the end-of-travel position sensing device and a first combination of the end-of-travel indicator being detected before the valve rotation stop is commanded and the end-of-travel indicator not being detected after the valve rotation stop is commanded, or a second combination of the end-of-travel indicator not being detected before the valve rotation stop is commanded and the end-of-travel indicator being detected after the valve rotation stop is commanded.

Another aspect of the present invention is directed to a method of controlling a rotatable valve. The method includes monitoring, by a controller, a status of a home indicator and an end-of-travel indicator of the rotatable valve, where the rotatable valve is operably coupled to a motor, a valve position indicator is configured to rotate with the rotatable valve, and at least two sensing devices are configured to detect the valve position indicator. The at least two sensing devices include a home position sensing device and an end-of-travel position sensing device. The method also includes determining, by the controller, a commanded direction of movement of the rotatable valve. The method further includes monitoring, by the controller, the status of the home indicator and the end-of-travel indicator before a valve rotation stop is commanded and after the valve rotation stop is commanded. The method additionally includes determining, by the controller, a current state of the rotatable valve based on the commanded direction of movement and at least one of the status of the home indicator and the end-of-travel indicator.

Embodiments may include converting, by motor control logic, a command into one or more motor commands to drive the motor, and providing feedback to the motor control logic based on the current state of the rotatable valve.

Embodiments may include setting a moving flag based on determining that the home indicator and the end-of-travel indicator are not detected currently and are not detected before and after the valve rotation stop is commanded.

Embodiments may include detecting an over-travel condition based on the detecting the home indicator or the end-of-travel indicator after the valve rotation stop is commanded, not currently detecting the home indicator or the end-of-travel indicator, and not detecting the home indicator or the end-of-travel indicator before the valve rotation stop is commanded.

Embodiments may include setting an at-home flag based on the commanded direction being toward the home position sensing device and a first combination of the home indicator being detected before the valve rotation stop is commanded and the home indicator not being detected after the valve rotation stop is commanded, or a second combination of the home indicator not being detected before the valve rotation stop is commanded and the home indicator being detected after the valve rotation stop is commanded.

Embodiments may include setting an at-end-of-travel flag based on the commanded direction being toward the end-of-travel position sensing device and a first combination of the end-of-travel indicator being detected before the valve rotation stop is commanded and the end-of-travel indicator not being detected after the valve rotation stop is commanded, or a second combination of the end-of-travel indicator not being detected before the valve rotation stop is commanded and the end-of-travel indicator being detected after the valve rotation stop is commanded.

Additional technical features and benefits are realized through the techniques of the present invention. Embodiments and aspects of the invention are described in detail herein and are considered a part of the claimed subject matter. For a better understanding, refer to the detailed description and to the drawings.

### BRIEF DESCRIPTION OF THE DRAWINGS

The specifics of the exclusive rights described herein are particularly pointed out and distinctly claimed in the claims at the conclusion of the specification. The foregoing and other features and advantages of the embodiments of the invention are apparent from the following detailed description taken in conjunction with the accompanying drawings in which:
FIG. 1 is a block diagram of a valve control system according to one or more embodiments;
FIG. 2 is a block diagram of a controller of a valve control system according to one or more embodiments;
FIG. 3 is a schematic view of a valve position sensing system according to one or more embodiments;
FIG. 4 is a schematic view of a redundant valve position sensing system according to one or more embodiments;
FIG. 5 depicts an example of rotation positions of a rotatable valve according to one or more embodiments;
FIG. 6 depicts a method of determining a valve position according to one or more embodiments; and
FIG. 7 depicts an example of a truth table that determines a current valve state according to one or more embodiments.

The diagrams depicted herein are illustrative. There can be many variations to the diagram or the operations described therein without departing from the spirit of the invention. For instance, the actions can be performed in a differing order or actions can be added, deleted or modified. Also, the term "coupled" and variations thereof describes having a communications path between two elements and does not imply a direct connection between the elements with no intervening elements/connections between them. All of these variations are considered a part of the specification.

### DETAILED DESCRIPTION

For the sake of brevity, conventional techniques related to making and using aspects of the invention may or may not be described in detail herein. In particular, various aspects of motor-based systems to implement the various technical features described herein are well known. Accordingly, in the interest of brevity, many conventional implementation details are only mentioned briefly herein or are omitted entirely without providing the well-known system and/or process details.

Turning now to an overview of technologies that are more specifically relevant to aspects of the disclosure, aspects of the present disclosure provide for a system and associated method for valve control with an indeterminant starting state. Embodiments allow a valve controller to determine the state of a rotatable valve while using two or more sensing devices. Control logic can include the use of a state machine to observe several valve control and status words to determine the position of the rotatable valve at any given time. Parameters such as the current commanded direction, the state of the sensing devices (e.g., valve position indicator detected or not detected), and the past states of the sensing devices can be monitored. A truth table can be used to determine the most likely state of the rotatable valve based on discrete signals. This can allow the rotatable valve to be controlled to the home position when starting, as well as functioning to stop rotation of the valve should it get to an end stop or a home stop. Embodiments can reduce the risk of the valve falling into an indeterminant state, either while running during normal operation or while in the process of initiating the valve to the home position. The logic can also account for various mechanical features, such as springing of the valve after a stop, that may have caused an error if not recognized as a valid valve state.

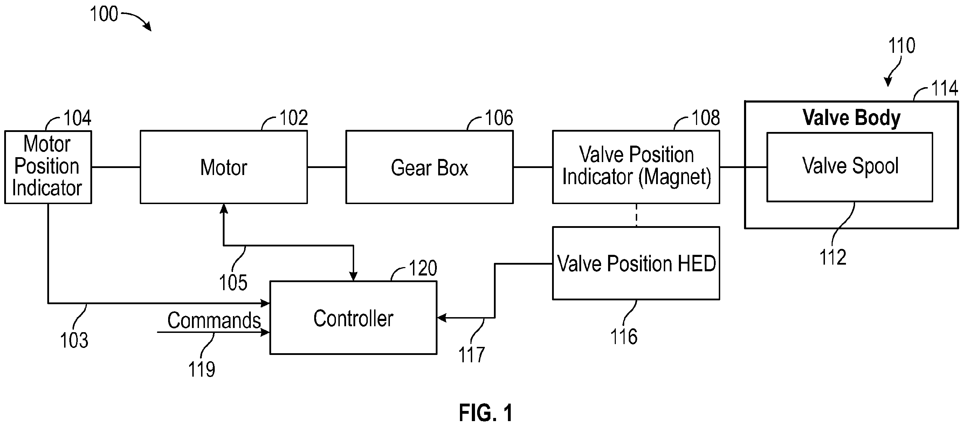

FIG. 1 is a block diagram of a valve control system 100 according to one or more embodiments. The valve control system 100 can include a motor 102 with a motor position indicator 104, where the motor 102 is coupled to a rotatable valve 110 through a gearbox 106. Alternatively, the motor 102 can directly drive the rotatable valve 110. A valve position indicator 108 can be positioned between the gearbox 106 and the rotatable valve 110. For example, the valve position indicator 108 can include one or more magnets coupled to a valve spool 112 configured to rotate within a valve body 114 of the rotatable valve 110. The valve spool 112 is an example of a closure element that can rotate (e.g., a rotating element) as driven by the motor 102 through the gearbox 106. The valve position indicator 108 can be detected by one or more sensing devices 116. As one example, the valve control system 100 can include at least two sensing devices 116 configured to detect the valve position indicator 108, where the at least two sensing devices 116 can include a home position sensing device and an end-of-travel position sensing device.

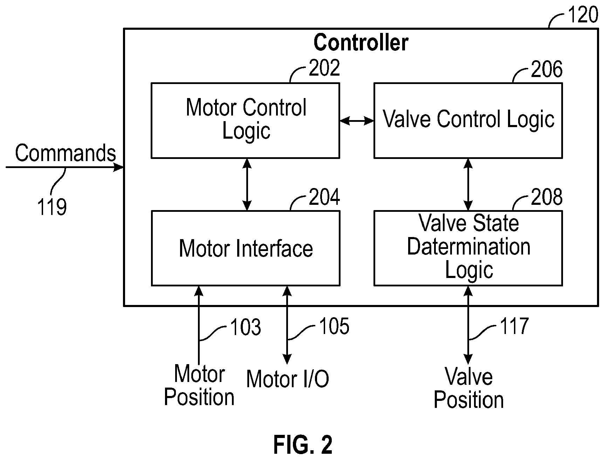

The valve control system 100 can also include a controller 120. The controller 120 is configured to receive a motor position input 103 from the motor position indicator 104 and drive one or more motor inputs/outputs (I/O) 105. The motor I/O 105 can include sensed current values as inputs and can include gate drive signals as outputs to control commutation of the motor 102. The motor 102 can be a stepper motor or other type of motor known in the art. The controller 120 can also receive one or more valve position inputs 117 from the at least two sensing devices 116. The controller 120 can additionally receive commands 119 from a control source that manages movement of a fluid through the rotatable valve 110. Further details about the controller 120 are described with respect to FIG. 2.

FIG. 2 is a block diagram of the controller 120 of the valve control system 100 of FIG. 1 according to one or more embodiments. In the example of FIG. 2, the controller 120 includes motor control logic 202, a motor interface 204, valve control logic 206, and valve state determination logic 208. The motor control logic 202, motor interface 204, valve control logic 206, and valve state determination logic 208 can be implemented in a hardware and some aspects may be controlled by a processing system. A memory system can store executable instructions to configure the controller 120 to perform a plurality of operations. Processing circuitry can include any type or combination of central processing unit (CPU), including one or more of: a microprocessor, a digital signal processor (DSP), a microcontroller, an application specific integrated circuit (ASIC), a field programmable gate array (FPGA), or the like. Executable instructions can be stored on a computer readable medium onto which data and algorithms can be stored in a non-transitory form. When implemented in circuitry, the controller 120 can use internal memory and/or registers to store configurable values and buffer commands and data.

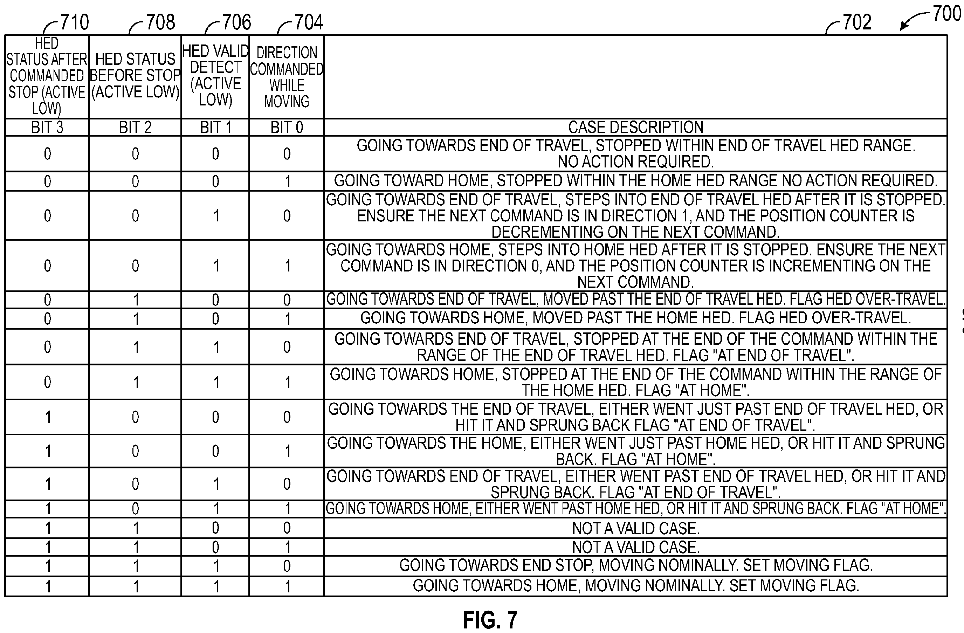

The valve state determination logic 208 can receive valve position inputs 117 from the at least two sensing devices 116. The valve state determination logic 208 can also receive status information through the valve control logic 206 to track a commanded direction of movement, rotation stop commands, and the detection status of each of the at least two sensing devices 116. Tracking whether each of the at least two sensing devices 116 currently detects the valve position indicator 108 in combination with tracking whether one of the at least two sensing devices 116 detected the valve position indicator 108 before or after a valve rotation stop is commanded can result in making a state determination for the rotatable valve 110. For example, these discrete inputs can be used as inputs for a truth table, such as truth table 700 of FIG. 7, to map the discrete inputs into a valve state determination. Where there is one instance of the valve position indicator 108, it can be detectable by only one of the sensing devices 116 at a time.

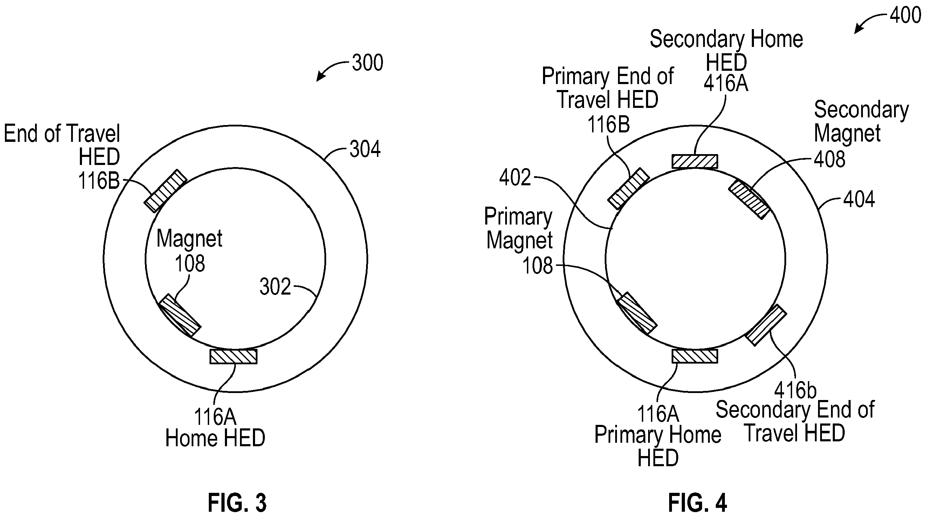

FIG. 3 is a schematic view of a valve position sensing system 300 according to one or more embodiments. The valve position sensing system 300 includes the valve position indicator 108, which can be a magnet, coupled to a rotatable portion 302 of the rotatable valve 110. The valve position sensing system 300 includes a home position sensing device 116A, which can be a Hall effect device (HED), and an end-of-travel position sensing device 116B, which can also be an HED. The home position sensing device 116A and the end-of-travel position sensing device 116B can be coupled to a non-rotating portion 304 of the rotatable valve 110. When the valve position indicator 108 rotates within a range of detection of the home position sensing device 116A, a current can be induced and a home indicator is detected by the controller 120. Similarly, when the valve position indicator 108 rotates within a range of detection of the end-of-travel position sensing device 116B, a current can be induced and an end-of-travel indicator is detected by the controller 120.

FIG. 4 is a schematic view of a redundant valve position sensing system 400 according to one or more embodiments. The redundant valve position sensing system 400 includes a primary and a secondary sensing system. Similar to the valve position sensing system 300, the valve position sensing system 400 includes a valve position indicator 108 (e.g. a primary valve position indicator), which can be a magnet, coupled to a rotatable portion 402 of the rotatable valve 110. The valve position sensing system 300 includes a home position sensing device 116A (e.g., a primary home position sensing device), which can be an HED, and an end-of-travel position sensing device 116B (e.g., a primary end-of-travel position sensing device), which can also be an HED. The valve position sensing system 400 also includes a secondary valve position indicator 408, which can be a magnet, coupled to the rotatable portion 402 of the rotatable valve 110. The valve position sensing system 400 also includes a secondary home position sensing device 416A, which can be an HED, and a secondary end-of-travel position sensing device 416B, which can also be an HED. The primary and secondary home position sensing devices 116A, 416A and end-of-travel position sensing devices 116B, 416B can be coupled to a non-rotatable portion 404 of the rotatable valve 110. The primary and secondary sensing devices 116A, 116B, 416A, 416B can be coupled to the same controller 120 or can be split between two separate instances or channels of the controller 120 for redundancy.

When the secondary valve position indicator 408 rotates within a range of detection of the secondary home position sensing device 416A, a current can be induced and a home indicator can be detected by the controller 120. Similarly, when the secondary valve position indicator 408 rotates within a range of detection of the secondary end-of-travel position sensing device 416B, a current can be induced and an end-of-travel indicator can detected by the controller 120. Additional levels of redundancy, such as a triplex system, can be implemented in some embodiments.

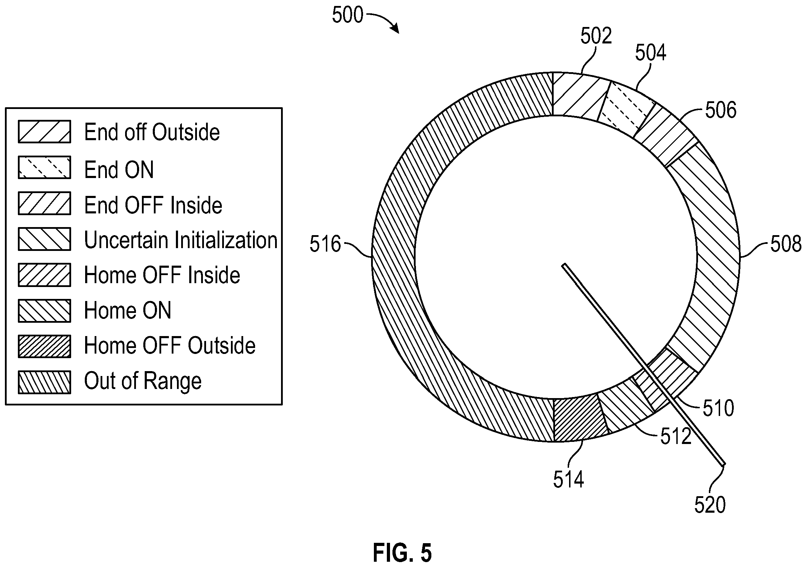

FIG. 5 depicts an example of rotation positions 500 of a rotatable valve, such as rotatable valve 110, according to one or more embodiments. The rotation positions 500 are described with respect to a non-redundant embodiment that can be extended to a redundant embodiment. In the example of FIG. 5, the rotation positions 500 include an end-off-outside region 502, an end-on region 504, an end-off-inside region 506, an uncertain initialization region 508, a home-off-inside region 510, a home-on region 512, a home-off-outside region 514, and an out-of-range region 516. The end-on region 504 can align with the end-of-travel position sensing device 116B, and the home-on region 512 can align with the home position sensing device 116A. The end-off-outside region 502 can indicate a minor over-rotation of a rotating element 520 of the rotatable valve 110, such as valve spool 112. The end-off-inside region 506 can indicate a minor under-rotation of the rotating element 520 from aligning with the end-of-travel position sensing device 116B. Similarly, the home-off-outside region 514 can indicate a minor over-rotation of the rotating element 520 past aligning with the home position sensing device 116A. The home-off-inside region 510 can indicate a minor under-rotation of the rotating element 520 from aligning with the home position sensing device 116A.

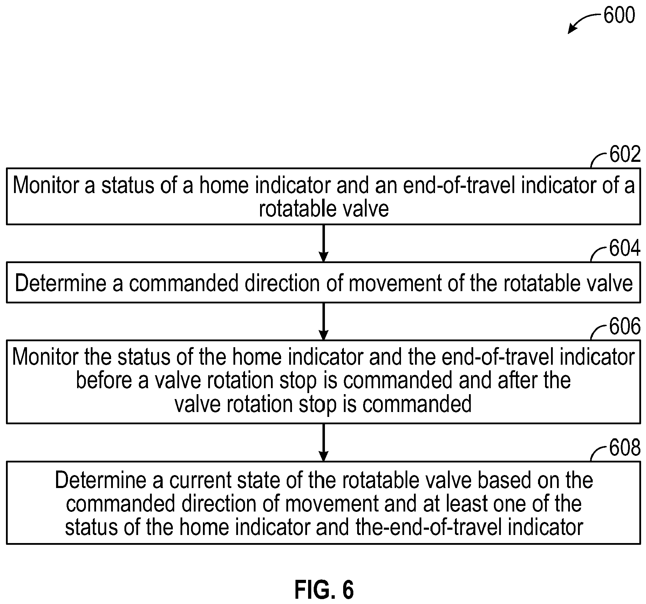

FIG. 6 depicts a process 600 of valve position determination with reference to FIGS. 1-7 for further illustration.

At block 602, valve state determination logic 208 can monitor a status of a home indicator and an end-of-travel indicator of the rotatable valve 110. At block 604, valve state determination logic 208 can determine a commanded direction of movement of the rotatable valve 110. At block 606, valve state determination logic 208 can monitor the status of the home indicator and the end-of-travel indicator before a valve rotation stop is commanded and after the valve rotation stop is commanded, for instance, as part of commands 119. At block 608, valve state determination logic 208 can determine a current state of the rotatable valve 110 based on the commanded direction of movement and at least one of the status of the home indicator and the end-of-travel indicator.

While the above description has described FIG. 6 in a particular order, it should be appreciated that unless otherwise specifically required in the attached claims that the ordering of the steps may be varied, and steps may be added, removed, combined, or further subdivided.

According to aspects, the valve position indicator 108 can be a magnet coupled to a rotatable portion 302 of the rotatable valve 110. The magnet can be detectable by the home position sensing device 116A when the magnet is proximate to a home-position of the rotatable valve 110, and the magnet can be detectable by the end-of-travel position sensing device 116B when the magnet is proximate to an end-of-travel position of the rotatable valve 110. The home position sensing device 116A can be a Hall effect device, and the end-of-travel position sensing device 116B can be a Hall effect device.

According to aspects, the sensing devices 116 can include a primary home-position Hall effect device, a primary end-of-travel position Hall effect device, a secondary home-position Hall effect device, and a secondary end-of-travel position Hall effect device, where the primary home-position Hall effect device and the primary end-of-travel position Hall effect device are configured to detect a primary magnet coupled to a rotatable portion 402 of the rotatable valve 110, and the secondary home-position Hall effect device and the secondary end-of-travel position Hall effect device are configured to detect a secondary magnet coupled to the rotatable portion 402 of the rotatable valve 110.

According to aspects, the controller 120 can include motor control logic 202 configured to convert a command into one or more motor commands to drive the motor 102. The controller 120 can also include valve control logic 206 configured to communicate with the motor control logic 202 and the valve state determination logic 208, where the valve control logic 206 is further configured to provide feedback to the motor control logic 202 based on the current state of the rotatable valve 110.

According to an aspect, the current state of the rotatable valve 110 can be determined to be within range of the home position sensing device 116A or the end-of-travel position sensing device 116B based on a sensor device status detected before and after the valve rotation stop is commanded. The commanded direction (e.g., toward home or toward end-of-travel) can be used to distinguish between the rotatable valve 110 moving toward the home position sensing device 116A or toward the end-of-travel position sensing device 116B.

According to an aspect, a moving flag can be set by the valve state determination logic 208 based on determining that the home indicator and the end-of-travel indicator are not detected currently and are not detected before and after the valve rotation stop is commanded.

According to an aspect, an over-travel condition can be detected by the valve state determination logic 208 based on the detecting the home indicator or the end-of-travel indicator after the valve rotation stop is commanded, not currently detecting the home indicator or the end-of-travel indicator, and not detecting the home indicator or the end-of-travel indicator before the valve rotation stop is commanded.

According to an aspect, an at-home flag can be set by the valve state determination logic 208 based on the commanded direction being toward the home position sensing device 116A and a first combination of the home indicator being detected before the valve rotation stop is commanded and the home indicator not being detected after the valve rotation stop is commanded, or a second combination of the home indicator not being detected before the valve rotation stop is commanded and the home indicator being detected after the valve rotation stop is commanded.

According to an aspect, an at-end-of-travel flag is set based on the commanded direction being toward the end-of-travel position sensing device 116B and a first combination of the end-of-travel indicator being detected before the valve rotation stop is commanded and the end-of-travel indicator not being detected after the valve rotation stop is commanded, or a second combination of the end-of-travel indicator not being detected before the valve rotation stop is commanded and the end-of-travel indicator being detected after the valve rotation stop is commanded.

Other conditions can be considered or otherwise combined to further refine the state determinations. For example, while the rotating element 520 is in the uncertain initialization region 508, the commanded direction can be used to determine whether the rotating element 520 will more likely be moving toward the end-off-inside region 506 or the home-off-inside region 510. Since the rotating element 520 cannot align with both the home position sensing device 116A and the end-of-travel position sensing device 116B at the same time, the logic of the valve state determination logic 208 can be simplified, where HED detection can be a logical combination of inputs from both of the home position sensing device 116A and the end-of-travel position sensing device 116B. Performing a logical AND (for active low) or a logical OR (for active high) of the sensor signals can result in simplified state determination logic that may only check four discrete bit values as illustrated in the example of FIG. 7.

FIG. 7 depicts an example of a truth table 700 that determines a current valve state according to one or more embodiments. Case descriptions 702 of the truth table 700 can be determined based on the states of four bits, which can indicate a direction commanded while moving 704, an HED valid detection 706, an HED status before a stop is commanded 708, and an HED status after the stop is commanded 710. Thus, through determining the status bit values embodied in bits 704-710, the most likely state of the rotatable valve 110 can be determined by the valve state determination logic 208, such as "moving", "at home", "at end of travel", "over travel", "direction change needed", and other such states. Using this information, the valve control logic 206 can request a change to the motor control logic 202 to drive motor commands to the motor 102 through the motor interface 204 to achieve a commanded state of the rotatable valve 110, such as open or closed.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Various embodiments of the invention are described herein with reference to the related drawings. Alternative embodiments of the invention can be devised without departing from the scope of this invention. Various connections and positional relationships (e.g., over, below, adjacent, etc.) are set forth between elements in the following description and in the drawings. These connections and/or positional relationships, unless specified otherwise, can be direct or indirect, and the present invention is not intended to be limiting in this respect. Accordingly, a coupling of entities can refer to either a direct or an indirect coupling, and a positional relationship between entities can be a direct or indirect positional relationship. Moreover, the various tasks and process steps described herein can be incorporated into a more comprehensive procedure or process having additional steps or functionality not described in detail herein.

The following definitions and abbreviations are to be used for the interpretation of the claims and the specification. As used herein, the terms "comprises," "comprising," "includes," "including," "has," "having," "contains" or "containing," or any other variation thereof, are intended to cover a non-exclusive inclusion. For example, a composition, a mixture, process, method, article, or apparatus that comprises a list of elements is not necessarily limited to only those elements but can include other elements not expressly listed or inherent to such composition, mixture, process, method, article, or apparatus.

Additionally, the term "exemplary" is used herein to mean "serving as an example, instance or illustration." Any embodiment or design described herein as "exemplary" is not necessarily to be construed as preferred or advantageous over other embodiments or designs. The terms "at least one" and "one or more" may be understood to include any integer number greater than or equal to one, i.e. one, two, three, four, etc. The terms "a plurality" may be understood to include any integer number greater than or equal to two, i.e. two, three, four, five, etc. The term "connection" may include both an indirect "connection" and a direct "connection."

While the present disclosure has been described with reference to an exemplary embodiment or embodiments, it will be understood by those skilled in the art that various changes may be made without departing from the scope of the invention as defined by the claims. In addition, many modifications may be made to adapt a particular situation or material to the teachings of the present disclosure without departing from the scope of the claims. Therefore, it is intended that the present disclosure not be limited to the particular embodiment disclosed as the best mode contemplated for carrying out this present disclosure, but that the present disclosure will include all embodiments falling within the scope of the claims.

## Claims

1. A valve control system comprising:
a rotatable valve (110) operably coupled to a motor (102);
a valve position indicator (108) configured to rotate with the rotatable valve;
at least two sensing devices (116) configured to detect the valve position indicator, the at least two sensing devices comprising a home position sensing device (116A) and an end-of-travel position sensing device (116B); and
a controller (120) comprising valve state determination logic having circuitry configured to:
monitor a status of a home indicator and an end-of-travel indicator of the rotatable valve;
determine a commanded direction of movement of the rotatable valve;
monitor the status of the home indicator and the end-of-travel indicator before a valve rotation stop is commanded and after the valve rotation stop is commanded; and
determine a current state of the rotatable valve based on the commanded direction of movement and at least one of the status of the home indicator and the end-of-travel indicator.

2. The valve control system of claim 1, wherein the valve position indicator comprises a magnet coupled to a rotatable portion of the rotatable valve, and wherein the magnet is detectable by the home position sensing device when the magnet is proximate to a home-position of the rotatable valve, and the magnet is detectable by the end-of-travel position sensing device when the magnet is proximate to an end-of-travel position of the rotatable valve.

3. The valve control system of claim 2, wherein the home position sensing device is a Hall effect device, and the end-of-travel position sensing device is a Hall effect device.

4. The valve control system of any preceding claim, wherein the at least two sensing devices comprise a primary home-position Hall effect device, a primary end-of-travel position Hall effect device, a secondary home-position Hall effect device, and a secondary end-of-travel position Hall effect device, wherein the primary home-position Hall effect device and the primary end-of-travel position Hall effect device are configured to detect a primary magnet coupled to a rotatable portion of the rotatable valve, and the secondary home-position Hall effect device and the secondary end-of-travel position Hall effect device are configured to detect a secondary magnet coupled to the rotatable portion of the rotatable valve.

5. The valve control system of any preceding claim, wherein the controller further comprises:
motor control logic (202) configured to convert a command into one or more motor commands to drive the motor; and
valve control logic configured to communicate with the motor control logic and the valve state determination logic, wherein the valve control logic is further configured to provide feedback to the motor control logic based on the current state of the rotatable valve.

6. The valve control system of any preceding claim, wherein the current state of the rotatable valve is determined to be within range of the home position sensing device or the end-of-travel position sensing device based on a sensor device status detected before and after the valve rotation stop is commanded, and wherein the commanded direction is used to distinguish between the rotatable valve moving toward the home position sensing device or toward the end-of-travel position sensing device.

7. The valve control system of any preceding claim, wherein a moving flag is set based on determining that the home indicator and the end-of-travel indicator are not detected currently and are not detected before and after the valve rotation stop is commanded, or wherein an over-travel condition is detected based on the detecting the home indicator or the end-of-travel indicator after the valve rotation stop is commanded, not currently detecting the home indicator or the end-of-travel indicator, and not detecting the home indicator or the end-of-travel indicator before the valve rotation stop is commanded.

8. The valve control system of any preceding claim, wherein an at-home flag is set based on the commanded direction being toward the home position sensing device and a first combination of the home indicator being detected before the valve rotation stop is commanded and the home indicator not being detected after the valve rotation stop is commanded, or a second combination of the home indicator not being detected before the valve rotation stop is commanded and the home indicator being detected after the valve rotation stop is commanded; or
wherein an at-end-of-travel flag is set based on the commanded direction being toward the end-of-travel position sensing device and a first combination of the end-of-travel indicator being detected before the valve rotation stop is commanded and the end-of-travel indicator not being detected after the valve rotation stop is commanded, or a second combination of the end-of-travel indicator not being detected before the valve rotation stop is commanded and the end-of-travel indicator being detected after the valve rotation stop is commanded.

9. A method of controlling a rotatable valve, the method comprising:
monitoring, by a controller, a status of a home indicator and an end-of-travel indicator of the rotatable valve, wherein the rotatable valve is operably coupled to a motor, a valve position indicator is configured to rotate with the rotatable valve, and at least two sensing devices comprising a home position sensing device and an end-of-travel position sensing device are configured to detect the valve position indicator;
determining, by the controller, a commanded direction of movement of the rotatable valve;
monitoring, by the controller, the status of the home indicator and the end-of-travel indicator before a valve rotation stop is commanded and after the valve rotation stop is commanded; and
determining, by the controller, a current state of the rotatable valve based on the commanded direction of movement and at least one of the status of the home indicator and the end-of-travel indicator.

10. The method of claim 9, wherein the valve position indicator comprises a magnet coupled to a rotatable portion of the rotatable valve, and wherein the magnet is detectable by the home position sensing device when the magnet is proximate to a home-position of the rotatable valve, and the magnet is detectable by the end-of-travel position sensing device when the magnet is proximate to an end-of-travel position of the rotatable valve, and optionally wherein the home position sensing device is a Hall effect device, and the end-of-travel position sensing device is a Hall effect device.

11. The method of claim 9 or 10, wherein the at least two sensing devices comprise a primary home-position Hall effect device, a primary end-of-travel position Hall effect device, a secondary home-position Hall effect device, and a secondary end-of-travel position Hall effect device, wherein the primary home-position Hall effect device and the primary end-of-travel position Hall effect device are configured to detect a primary magnet coupled to a rotatable portion of the rotatable valve, and the secondary home-position Hall effect device and the secondary end-of-travel position Hall effect device are configured to detect a secondary magnet coupled to the rotatable portion of the rotatable valve.

12. The method of claim 9, 10 or 11, further comprising:
converting, by motor control logic, a command into one or more motor commands to drive the motor; and
providing feedback to the motor control logic based on the current state of the rotatable valve.

13. The method of any of claims 9 to 12, wherein the current state of the rotatable valve is determined to be within range of the home position sensing device or the end-of-travel position sensing device based on a sensor device status detected before and after the valve rotation stop is commanded, and wherein the commanded direction is used to distinguish between the rotatable valve moving toward the home position sensing device or toward the end-of-travel position sensing device.

14. The method of any of claims 9 to 13, further comprising:
setting a moving flag based on determining that the home indicator and the end-of-travel indicator are not detected currently and are not detected before and after the valve rotation stop is commanded; or
detecting an over-travel condition based on the detecting the home indicator or the end-of-travel indicator after the valve rotation stop is commanded, not currently detecting the home indicator or the end-of-travel indicator, and not detecting the home indicator or the end-of-travel indicator before the valve rotation stop is commanded.

15. The method of any of claims 9 to 14, further comprising:
setting an at-home flag based on the commanded direction being toward the home position sensing device and a first combination of the home indicator being detected before the valve rotation stop is commanded and the home indicator not being detected after the valve rotation stop is commanded, or a second combination of the home indicator not being detected before the valve rotation stop is commanded and the home indicator being detected after the valve rotation stop is commanded; or
setting an at-end-of-travel flag based on the commanded direction being toward the end-of-travel position sensing device and a first combination of the end-of-travel indicator being detected before the valve rotation stop is commanded and the end-of-travel indicator not being detected after the valve rotation stop is commanded, or a second combination of the end-of-travel indicator not being detected before the valve rotation stop is commanded and the end-of-travel indicator being detected after the valve rotation stop is commanded.
